# EUROPEAN PATENT SPECIFICATION

(11) **EP 2 294 860 B1**
(45) Date of publication and mention of the grant of the patent: **19.04.2017**
(21) Application number: 09773839.7
(22) Date of filing: 05.06.2009
(51) Int. Cl.: H04W 36/06

(54) **A METHOD AND APPARATUS FOR SUPPORTING FAST CARRIER RESELECTION**
VERFAHREN UND VORRICHTUNG ZUR UNTERSTÜTZUNG EINER SCHNELLEN TRÄGERNEUAUSWAHL
PROCÉDÉ ET APPAREIL DE SUPPORT DE NOUVELLE SÉLECTION DE PORTEUSE RAPIDE

(30) Priority: 03.07.2008 US 78112 P
(43) Date of publication of application: 16.03.2011
(73) Proprietor: Telefonaktiebolaget LM Ericsson (publ), 164 83 Stockholm (SE)
(72) Inventor: BERGMAN, Johan, S-112 27 Stockholm (SE); GUNNARSSON, Fredrik, S-587 50 Linköping (SE)
(74) Representative: Ericsson
(86) International application number: PCT/SE2009/050679
(87) International publication number: WO 2010/002324

(56) References cited:
- WO-A1-03/094542
- US-A1- 2006 281 465
- US-B1- 6 253 087
- 'Technical Specification, 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)' 3GPP TS 36.300 V8.5.0 (2008-05), [Online] May 2008, pages 41 - 44, XP002532523 Retrieved from the Internet: <URL:http://www.3gpp.org/ftp/Specs/archiv /36_series/36.300/36300-850.zip> [retrieved on 2009-09-15]
- 'Technical Specification, 3rd Generation Partnership Project; Technical Specification Group Radio Access Network; Radio Resource Control (RRC); Protocol Specification (Release 5)' 3GPP TS 25.331 V5.16.0 (2006-03), [Online] March 2006, XP003026036 Retrieved from the Internet: <URL:http://www.3gpp.org/ftp/Specs/archive/ 25-series/25.331/25331-5g0.zip> [retrieved on 2009-09-16]
- FIORINI, A. ET AL: 'Load sharing methods in a WCDMA macro multi-carrier scenario' VEHICULAR TECHNOLOGY CONFERENCE, 2003. VTC 2003-FALL. 2003 IEEE 58TH, [Online] vol. 2, 06 October 2003 - 09 October 2003, pages 816 - 820, XP010700851 Retrieved from the Internet: <URL:http://ieeexplore.ieee.org/stamp/stamp .jsp?tp=&arnumber=1285134&isnumber=28569>
- CHRISTINA GESSNER: 'Protocol stack testing for LTE technology, Effective test strategies can help transform UMTS into a cellular-wideband system', [Online] 29 May 2008, pages 29 - 36, XP003026037 Retrieved from the Internet: <URL:http://www.edn.com/contents/images/656 2581.pdf> [retrieved on 2009-09-15]

## Description

### TECHNICAL FIELD

The technical field relates to radio telecommunications, and particularly, to controlling carrier reselection in a cellular communications system.

### BACKGROUND

A mobile radio communication system, such as a UMTS (Universal Mobile Telecommunication System) type system, includes a mobile radio communication network communicating with mobile terminals or UEs (User Equipments) and with external networks. Traditionally, communications are facilitated using one or more radio base stations that provide radio coverage for one or more cell areas. Various cellular mobile communications include procedures to handover different UEs from one cell to another depending on the experienced radio conditions (e.g. moving UEs) and/or to change frequency carriers for some other reason (e.g., load balancing, coverage, etc). For ease of description, the term "carrier reallocation" is a general term used to cover any operation in which a radio carrier associated by a radio access network with a mobile radio terminal is changed, reselected, reassigned, handed over, etc. for whatever reason.

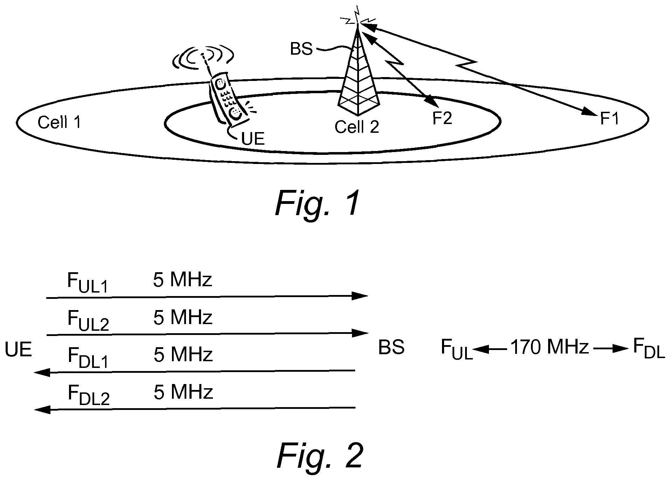

The term "carrier" often refers to a frequency carrier, but it also includes any type of communications signal carrier. The operator of a mobile radio communications system may use more than one frequency band for uplink communication in each base station service area. Figure 1 shows a non-limiting example where a base station service area that includes two co-sited cells 1 and 2. The uplink coverage of two co-sited cells is different because each cell allows a different Rise over Thermal (RoT). In this example, the larger cell 1 uses an uplink radio frequency carrier F1 and a RoT aimed for full uplink coverage. The smaller cell 2 uses an uplink radio frequency carrier F2 and a higher RoT aimed at allowing high bit rates. Cell 1 ensures random access coverage for mobile terminals in the base station's full service area, and cell 2 supports high uplink data rates, albeit in a smaller portion of that service area.

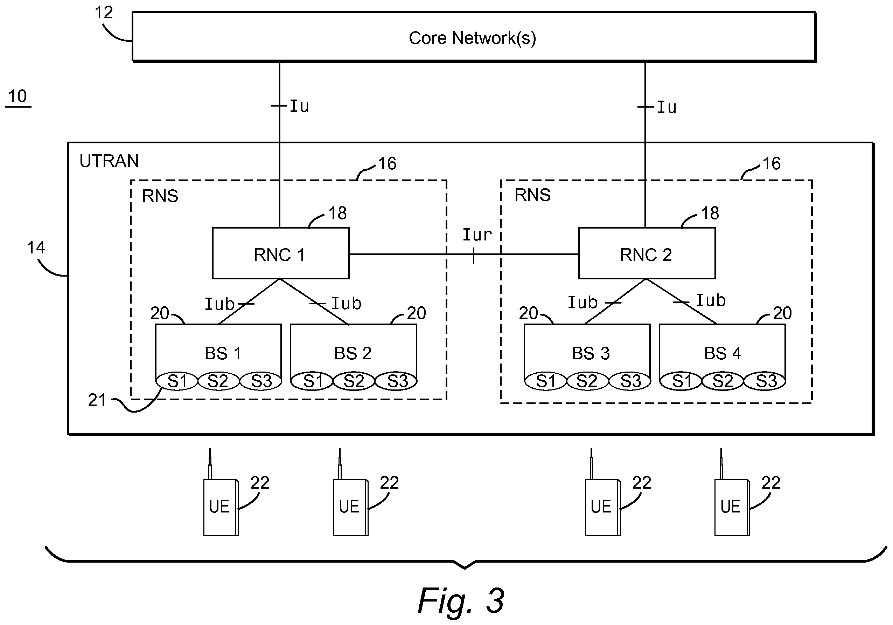

Figure 2 is a diagram showing a non-limiting example where multiple uplink and downlink radio carrier frequencies are used. The two different RF carrier frequencies shown in Figure 3 are uplink frequencies F_{UL1} and F_{UL2} corresponding to the first and second cells each having, in this example, a different 5 MHz frequency band. The base station employs two different downlink frequencies F_{DL1} and F_{DL2} corresponding to the first and second cells each having in this example a different 5 MHz frequency band. The uplink frequencies and downlink frequencies may be separated by 170 MHz.

One likely scenario for multiple carrier configurations is that the carriers will not have equal capability. For example, the mobile is allocated one carrier persistently, referred to as a primary serving carrier, an anchor serving carrier, a main serving carrier, etc., while data may also be transmitted using one or more secondary serving carriers. Key information such as critical system information, critical feedback information, traffic that cannot be dynamically scheduled by the base station, etc. are typically signaled over the primary serving carrier, while for example traffic that can be dynamically scheduled by the base station can be sent over the respective serving carrier, either primary or secondary carriers. It is also possible that the primary and secondary carriers support different data rates, coverage, etc. Random access for initial access to the wireless network may for example only be supported on one of the carriers. Furthermore, it is possible that different mobile terminals have different primary serving carriers, which means that a carrier that is a primary serving carrier of one mobile is a secondary serving carrier of another.

In the 3GPP release 99 of UMTS, the radio network controller (RNC) controls resources and user mobility. Resource control in this framework means admission control, congestion control, and channel switching which corresponds to changing the data rate of a connection. Furthermore, a dedicated connection is carried over a logical dedicated channel DCH realized as a DPCCH (Dedicated Physical Control Channel) and a DPDCH (Dedicated Physical Data Channel).

In the evolving 3G standards, the trend is to decentralize decision making, and in particular, to decentralize control over the short term data rate of the user connection to the serving base station. That base station allocates UE uplink data for transmission to an uplink enhanced dedicated channel (E-DCH), realized on the physical layer as a DPCCH, which is continuous, and an E-DPCCH for data control and E-DPDCH for data, and the two latter are only transmitted when there is uplink data to send. In this context, the base station (sometimes called a Node B) has an uplink scheduler determines which transport formats each UE can use for uplink transmission over E-DPDCH. The RNC is, however, still responsible for admission control and mobility including intra-frequency and inter-frequency handovers.

Intra-frequency handovers (handover on the same frequency but to a different base station, sector, or cell) are typically performed in order to ensure that the UE is communicating with the cell with the best radio conditions. It is possible in some systems to have active radio communication links to more than one cell, either at different base stations (macro diversity or soft handover) or at the same base station (softer handover).

Carrier reselection and inter-frequency handover may be performed to even out the load between carriers and to consider alternative carriers when the coverage at the serving carrier is insufficient. And as shown in Figure 1, carriers may also intentionally have different coverage areas by allowing a different amount of uplink interference power level for different carriers. One example of a system with unequally loaded uplink carriers is a multi-carrier system where some carriers primarily carry control signals and low data rate services and other carriers carry data traffic which may have the option of operating at high data rates (which also correspond to high uplink interference power levels). Commonly-assigned U.S. patent application, serial number 11/730,575, filed on April 2, 2007, describes a method and arrangement that directs random access to a low load carrier and evaluates whether a particular user benefits from transmitting at another carrier where high data rates are supported and high interference levels are allowed.

The patent publication US 6,253,087 discloses a technique for traffic management in spread spectrum wireless telecommunications systems using different admission control levels in different frequency layers. The patent application publication US2006/0281465 discloses a method and apparatus for establishing an active set of carriers from a plurality of available carriers for a wireless receiver.

Although the base station may be responsible for resource management and data rate control based on UE reports, and may also detect the need for inter-frequency handover, the actual decision and orchestration of the inter-frequency handover is typically performed by the RNC or similar node coupled to multiple base stations. Unfortunately, the RNC decision making and decision execution is slower than desired.

### SUMMARY

The reader is referred to the appended independent claims. Some preferred features are laid out in the dependent claims.

The inventors decided that in order to utilize uplink multi-carrier communication more efficiently and to support fast inter-frequency handovers, carrier reallocation decisions should be performed by the serving base station. Various non-limiting examples are described for executing the base station carrier reallocation decision.

A method and apparatus are provided that support fast uplink carrier reallocation, one non-limiting example of which is fast inter-frequency handover, triggered by a base station serving a mobile radio terminal. The term carrier includes any type of signal carrier such as a frequency-based carrier or a code-based carrier. Such carrier reallocation may be beneficial, for example, to efficiently share a load between carriers and/or flexibly and accurately manage uplink resources.

In a cellular radio communication system, a serving base station serves a mobile radio terminal in a serving cell using a first carrier signal. The serving base station first decides that a future communication with the mobile radio terminal should use a second different carrier signal. Then, the serving base station generates a carrier reallocation signal that indicates the serving base station's determination that the future communication with the mobile terminal is to be conducted using the second carrier signal. If there are multiple cells in an active set of cells associated with the mobile terminal, then the carrier reallocation signal is provided to base stations having a cell in that active set. The serving base station may or may not be aware that there are one or more other base stations with a radio link with the UE. Preferably, the carrier reallocation signal includes a time associated with the carrier reallocation for the future communication.

In one non-limiting example the serving base station makes the actual determination that the carrier reselection will occur and sends the carrier reallocation signal to the mobile radio terminal which then notifies base stations having a cell in the active set of cells associated with the mobile terminal of the carrier reallocation. In another non-limiting example embodiment where the serving base station makes the actual determination that the carrier reselection will occur, the serving base station provides the carrier reallocation signal to a radio network controller coupled to base stations having a cell in the mobile's active set of cells. The radio network controller sends a signal to notify those base stations having a cell in the active set of cells of the carrier reallocation. In another non-limiting example embodiment, the radio network controller makes the actual determination that the carrier reallocation will occur and sends a signal to notify base stations having a cell in the active set of cells of the carrier reallocation.

One non-limiting example application is inter-frequency handover where when a radio communication exists between the mobile radio terminal and the serving base station, the carrier reallocation is an inter-frequency handover of the radio communication from a first carrier frequency to the second carrier frequency. In this case, the future communication is a radio communication between the serving base station and the mobile radio terminal on a second carrier frequency. The carrier reallocation signal preferably includes a time associated with the carrier reallocation to synchronize the inter-frequency handover for the base stations having a cell in an active set of cells associated with the mobile terminal. For example, the carrier reallocation signal includes an execution time for executing the inter-frequency handover such that at the execution time, the base stations and the mobile radio station involved in the inter-frequency handover establish radio links on the second carrier frequency. If, at or after the execution time, one of the base stations involved in the inter-frequency handover fails to establish a radio link on the second carrier frequency, then the one base station is informed of the inter-frequency handover, e.g., a radio network controller.

The serving base station may determines a need for the carrier reallocation based on a load associated with the first carrier frequency, the second carrier frequency, or both and/or based on a coverage associated with the first carrier frequency, the second carrier frequency, or both.

In a non-limiting example implementation, the carrier reallocation signal may be a layer 1 (L1) or layer 2 (L2) message. Another example alternative is for the carrier reallocation signal itself to be the future communication with the mobile terminal transmitted using the second carrier signal such that a receiver of the second carrier signal may detect the change from the first carrier signal to the second carrier signal.

The first carrier signal and the second carrier signal may each be a primary serving carrier for the mobile terminal. The mobile radio terminal is only allocated one primary serving carrier at a given time. The first carrier signal is the primary serving carrier for the mobile radio terminal and then the second carrier signal becomes the primary serving carrier for the mobile radio terminal for the future communication. The mobile terminal may also be allocated one or more secondary carriers primarily used for data transmission. In one example embodiment, initially the first carrier signal is the primary serving carrier and the second carrier signal is a secondary serving carrier, and then the second carrier signal becomes the primary serving carrier while the first carrier signal becomes a secondary serving carrier.

### BRIEF DESCRIPTION OF THE DRAWINGS

Figure 1 illustrates a base station providing service for two co-sited cells having different uplink radio carrier frequencies;
Figure 2 is a diagram showing multiple uplink and downlink radio carrier frequencies;
Figure 3 a block diagram of an example UTRAN mobile radio communications system;
Figure 4 a block diagram of an example LTE mobile radio communications system;
Figure 5 illustrates an example signaling diagram illustrating a non-limiting example where the UE relays a serving base station decision for an uplink carrier reselection for the UE;
Figure 6 is a non-limiting example flowchart associated with the non-limiting example related to Figure 5;
Figure 7 illustrates an example signaling diagram illustrating another non-limiting example where an RNC relays a serving base station decision for an uplink carrier reselection;
Figure 8 is a non-limiting example flowchart associated with the non-limiting example related to Figure 7;
Figure 9 illustrates an example signaling diagram illustrating another non-limiting example where an RNC takes the actual determination for an uplink carrier reselection in response to a serving base station decision suggesting an uplink carrier reselection;
Figure 10 is a non-limiting example flowchart associated with the non-limiting example related to Figure 9; and
Figure 11 shows non-limiting function block diagrams illustrating example computer-implemented functional entities in the RNC and base stations for implementing the example signaling and procedures described in the previous figures.

### DETAILED DESCRIPTION

In the following description, for purposes of explanation and not limitation, specific details are set forth such as particular architectures, interfaces, techniques, etc. However, it will be apparent to those skilled in the art that the claimed technology may be practiced in other embodiments that depart from these specific details. That is, those skilled in the art will be able to devise various arrangements which, although not explicitly described or shown herein, embody the principles of the claimed technology and are included within its spirit and scope. In some instances, detailed descriptions of well-known devices, circuits, and methods are omitted so as not to obscure the description of the present invention with unnecessary detail. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein represent conceptual views of illustrative circuitry embodying the principles of the technology. Similarly, it will be appreciated various processes and functions described may be substantially represented in a computer-readable medium and can be executed by a computer or processor.

The functions of the various elements including control-related functional blocks may be provided through the use of electronic circuitry such as dedicated hardware as well as computer hardware capable of executing software. When provided by a computer processor, the functions may be provided by a single dedicated processor, by a single shared processor, or by a plurality of individual processors, some of which may be shared or distributed. Moreover, a processor or controller may include, without limitation, digital signal processor (DSP) hardware, ASIC hardware, read only memory (ROM), random access memory (RAM), and/or other storage media.

It will be apparent to one skilled in the art that other embodiments may be practiced apart from the specific details disclosed below. The technology is described in the context of a 3GPP UMTS system in order to provide an example and non-limiting context for explanation. But this technology may be used in any modern cellular communications system that can supports carrier reallocation.

Figure 3 illustrates a non-limiting example of a third generation, WCDMA-based, UMTS cellular radio communication system 10. The User Equipment (UE) 22 is the mobile radio terminal by which a user/subscriber can access services offered by the operator's Core Network(s) 12. Those networks are coupled to other networks such as the public switched telephone network (PSTN) and the Internet (not shown). The UMTS Terrestrial Radio Access Network (UTRAN) 14 is responsible for the establishment and control of radio connections with the mobile UEs. The Radio Network Subsystem (RNS) 16 controls a number of Base Stations (BSs) 20 in the UTRAN 14, with each base station being shown with three sector cells 21 (S1-S3) for illustration purposes. Each base station 20 coordinates radio communications in one or more cells. A cell covers a geographical area and is identified by a unique identity broadcast in the cell by its base station. There may be more than one cell covering the same geographical area, and in this case, two of the base station cells may be co-sited. Each Radio Network Controller (RNC) 18 controls radio resources and radio connectivity within a set of cells.

A UE or mobile radio terminal connection logically represents the communication between a UE and one cell in the radio access network, and a radio link provides the actual physical radio connection between the UE and a base station associated with the cell. All cells with a radio link to/from a UE belong to the active set of that UE. An active set of base stations corresponds to the set of base stations that have a cell with a radio link with the UE.

Figure 3 shows interfaces connecting the different nodes in the UTRAN 14. The Iu interface is defined between the core network 12 and the UTRAN 14. The Iur interface is defined for communications between RNCs 18. The Iub interface is defined for communications between the RNC 18 and its base stations 20. User data is transported on transport bearers over these interfaces. Depending on the transport network used, these transport bearers may be mapped to AAL2 connections (in case of an ATM-based transport network) or UDP connections (in case of an IP-based transport network). Control messages are transported using the same bearers as data over Iub. Furthermore, radio bearers for signalling and data respectively are established between the serving RNC and the UE. These signalling radio bearers carry radio resource control (RRC) messages between a serving RNC and the UE and are sent via all cells in the UE's active set

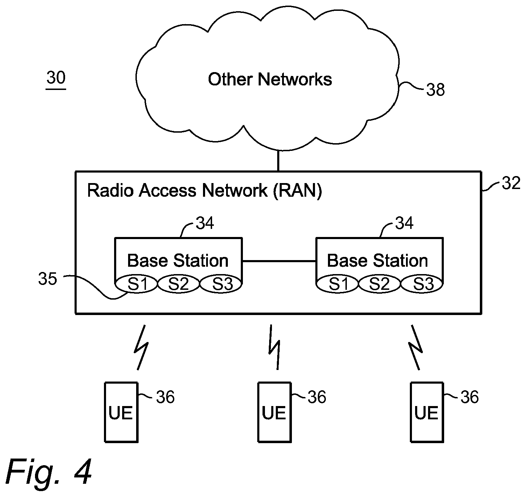

Figure 4 illustrates a non-limiting example of an LTE mobile communication system 30. A radio access network (RAN) 32 is coupled to one or more other networks 38 such as one or more core network nodes and one or more external networks such as the public switched telephone network (PSTN) and the Internet. Each base station 34 is shown with three sector cells 35 (S1-S3) for illustration purposes. The RAN 32 includes base stations 34 that communicate with each other, e.g., for handover and other coordinated functions. The base stations communicate over the radio/air interface with mobile radio terminals also referred to as user equipment (UE) 36. At least some of the operations that would be performed in the RNC in the UMTS system 10 shown in Figure 3 are performed in the base stations in the LTE system 30. As mentioned above, the examples below are described in the context of a 3G UMTS system like system 10 in Figure 3.

In a first non-limiting example the serving base station signals the UE about the carrier reallocation, and the UE informs all other base stations with cells in the UE's active set that a carrier reallocation will be executed for this UE and the time of execution. In addition, less time sensitive signaling may be sent to a radio network controller (RNC) or similar node advising of the carrier reallocation.

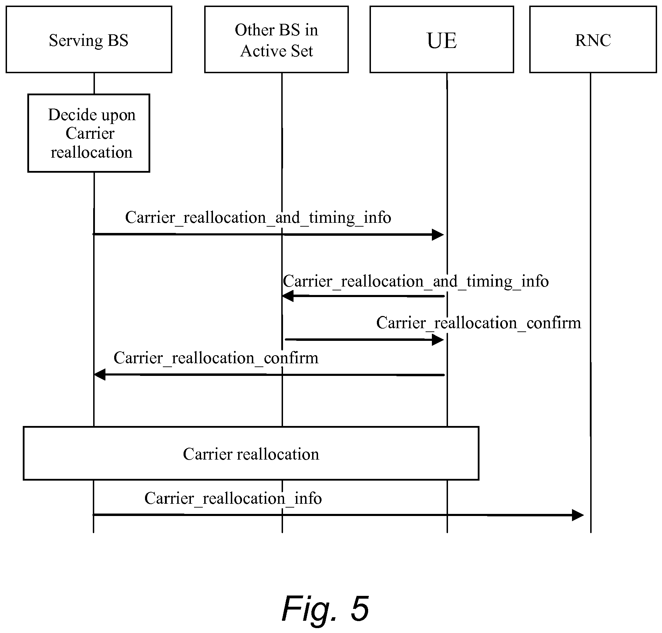

Figure 5 illustrates an example signalling diagram illustrating a non-limiting example where the UE relays a serving base station decision for an uplink carrier reallocation to other base stations with cells in the UE's active set. The serving base station makes an initial decision that there needs to be a carrier reallocation for the UE and sends a carrier reallocation message with reallocation timing information to the UE. Alternatively, the carrier reallocation message could be a message sent to the UE using a different carrier and the UE detects that new carrier. The UE responds in this embodiment by sending a carrier reallocation message with reallocation timing information to other base stations having a cell in the active set for that UE. Those other base stations return a carrier reallocation confirmation message to the UE which in turn sends a carrier reallocation confirmation message to the serving base station. At the carrier reallocation time, the carrier reallocation is executed and the serving base station notifies the radio network controller of the carrier reallocation execution.

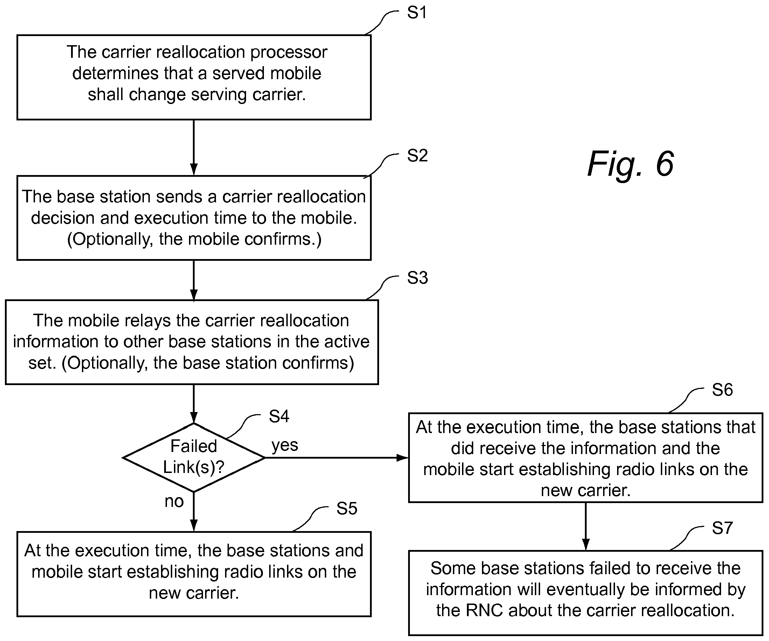

Figure 6 is a non-limiting example flowchart associated with the non-limiting example related to Figure 5. At step S1, a carrier reallocation processor in the serving base station determines that a served mobile terminal shall change carrier. The serving base station sends a carrier reallocation decision and execution time to the mobile terminal which optionally confirms same (step S2). The mobile terminal relays the carrier reallocation information to other base stations having a cell in mobile's active set, and optionally, those base stations confirm (step S3). A determination is made in step S4 whether one or more radio links with the mobile terminal have failed. If not, the active set base stations and the mobile terminal start establishing radio links using the new carrier at the execution time (step S5). Otherwise, the base stations that did receive the information start establishing radio links on the new carrier with the mobile terminal at the execution time (step S6). But for the failed base stations, the RNC eventually informs them about the carrier reallocation (step S7).

In another non-limiting example where an RNC is coupled to multiple base stations having a cell in a UE's active cell list, the serving base station signals to the RNC that a carrier reallocation has been decided upon for the UE along with an execution time for that carrier reallocation. The RNC then informs all other base stations with cells in the UE's active set. Some cells in the UE's active set may be controlled by a different RNC. In such a case, the RNC relays the carrier reallocation signal to the other RNC(s) via signaling over Iur, and each RNC then informs its base stations with cells in the UE's active set. It is also possible that the UE is served by one serving RNC, and all cells in the UE's active set are controlled by a different controlling RNC. In such a case, the carrier reallocation signal is provided to all base stations with cells in the UE's active set via the controlling RNC, but the carrier reallocation signal is also provided via Iur to the serving RNC.

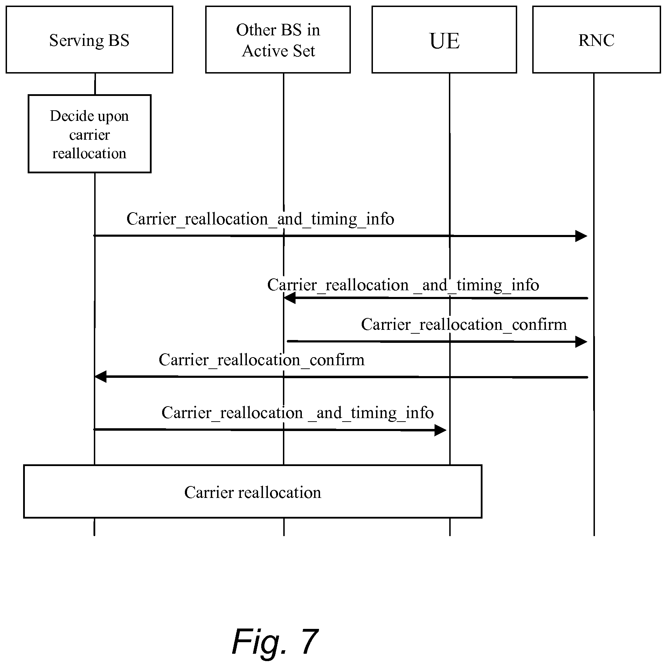

Figure 7 illustrates an example signaling diagram illustrating this non-limiting example where an RNC relays a serving base station decision for an uplink carrier reselection. The serving base station makes an initial decision that there needs to be a carrier reallocation for the UE and sends a carrier reallocation message with reallocation timing information to the RNC. The RNC responds in this embodiment by sending a carrier reallocation message with reallocation timing information to other base stations having a cell in the active set for that UE. If any cell in the UE's active set is controlled by a different RNC, the RNC relays the carrier reallocation signal with reallocation timing information to the other RNC(s) via signaling over Iur, and each RNC then informs its base stations with cells in the UE's active set. Moreover, if all cells in the UE's active set are controlled by a controlling RNC different from the serving RNC, the controlling RNC provides the carrier reallocation signal to the serving RNC via Iur. Those base stations with cells in the UE's active set return a carrier reallocation confirmation message to their RNC which in turn sends a carrier reallocation confirmation message to the serving base station. The serving base station then sends the carrier reallocation message with reallocation timing information to the UE. At the carrier reallocation time, the carrier reallocation is executed.

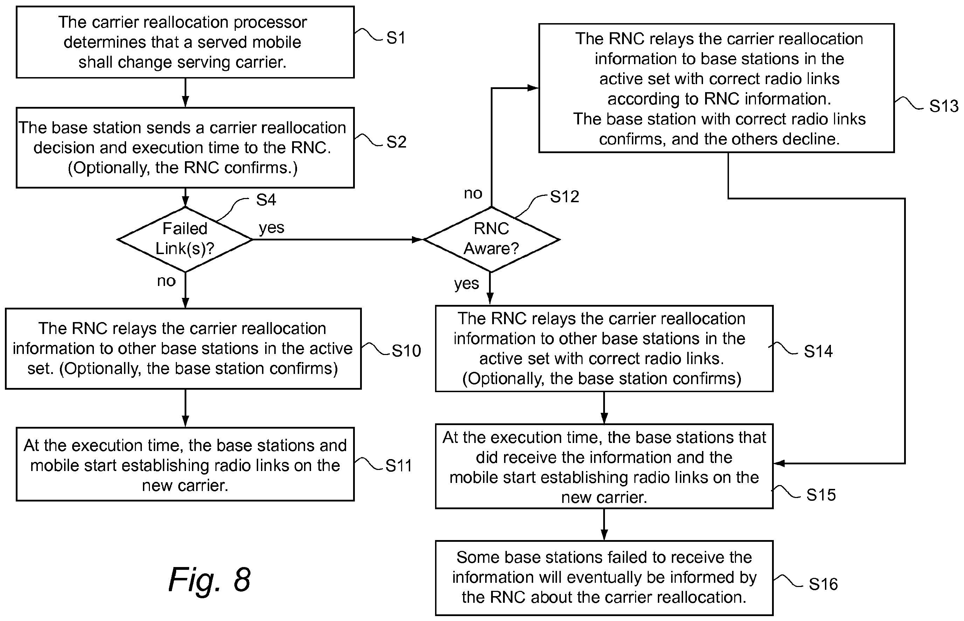

Figure 8 is a non-limiting example flowchart associated with the non-limiting embodiment related to Figure 7. At step S1, a carrier reallocation processor in the serving base station determines that a served mobile terminal shall change carrier. The serving base station sends a carrier reallocation decision and execution time to the mobile terminal which optionally confirms same (step S2). The mobile terminal relays the carrier reallocation information to other base stations having a cell in the mobile's active set, and optionally, those base stations confirm (step S3). A determination is made in step S4 whether one or more radio links with the mobile terminal have failed. If not, the RNC relays the carrier reallocation information to other base stations in the active set and optionally the base stations confirm (step S10). Again, if any cell in the UE's active set is controlled by a different RNC, the RNC relays the carrier reallocation signal with reallocation timing information to the other RNC(s) via signaling over Iur, and each RNC then informs its base stations with cells in the UE's active set. The active set base stations and the mobile terminal start establishing radio links using the new carrier at the execution time (step S11). Otherwise, another decision is made in step S12 whether an RNC is aware of the failed link(s). If so, that RNC relays the carrier reallocation information to other base stations in the active set with correct radio links, and the base stations optionally confirm (step S 14). The base stations that did receive the information start establishing radio links on the new carrier with the mobile terminal at the execution time (step S 15). But for the failed base stations, the RNC eventually informs them about the carrier reallocation (step S16). If an RNC is unaware of the failed link(s), the RNC relays the carrier reallocation information to all the base stations in the active set with correct/functioning radio links to the mobile terminal. Those base stations with functioning radio links confirm, and the other base stations decline (step 13).

In another example non-limiting example where an RNC is coupled to multiple base stations having a cell in a UE's active cell list, the serving base station signals to the RNC that a carrier reallocation is desired. In other words, the serving base station makes a decision that the carrier reallocation should occur, but leaves it to the RNC to make the final determination that such carrier reallocation should actually occur. After receiving such a trigger signal from the serving base station, the RNC initiates the carrier reallocation including determining and signaling the execution time for the carrier reallocation to the necessary base stations and to the UE. If any cell in the UE's active set is controlled by a different RNC, the RNC relays the carrier reallocation signal with reallocation timing information to the other RNC(s) via signaling over Iur, and each RNC then informs its base stations with cells in the UE's active set. Moreover, if all cells in the UE's active set are controlled by a controlling RNC different from the serving RNC, the controlling RNC provides the carrier reallocation signal to the serving RNC via Iur.

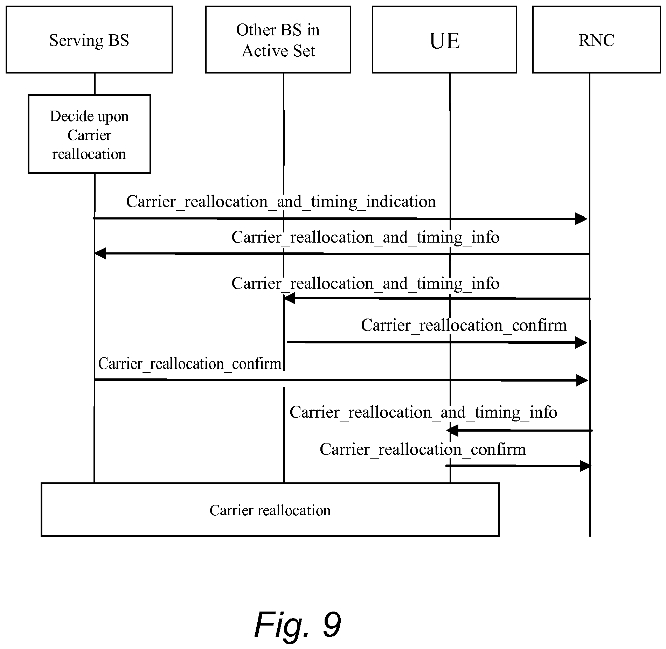

Figure 9 illustrates an example signaling diagram illustrating another non-limiting example where an RNC takes the actual determination for an uplink carrier reselection in response to a serving base station decision suggesting an uplink carrier reselection. The serving base station makes an initial decision that there needs to be a carrier reallocation for the UE and sends a carrier reallocation indication message with optional reallocation timing information to the RNC. The RNC responds in this embodiment by sending an actual carrier reallocation message with reallocation timing information to the serving and other base stations having a cell in the active set for that UE. If any cell in the UE's active set is controlled by a different RNC, the RNC relays the carrier reallocation signal with reallocation timing information to the other RNC(s) via signaling over Iur, and each RNC then informs its base stations with cells in the UE's active set. Moreover, if all cells in the UE's active set are controlled by a controlling RNC different from the serving RNC, the controlling RNC provides the carrier reallocation signal to the serving RNC via Iur.

The serving and other base stations with a cell in the UE's active set return a carrier reallocation confirmation message to the RNC (either directly or via their RNC and the Iur). The RNC may use the reallocation time from the serving base station, if provided, override the reallocation time from the serving cell, or determine a new reallocation time. The RNC sends the carrier reallocation message with reallocation timing information to the UE via all base stations with cells in the active set. At the carrier reallocation time, the carrier reallocation is executed.

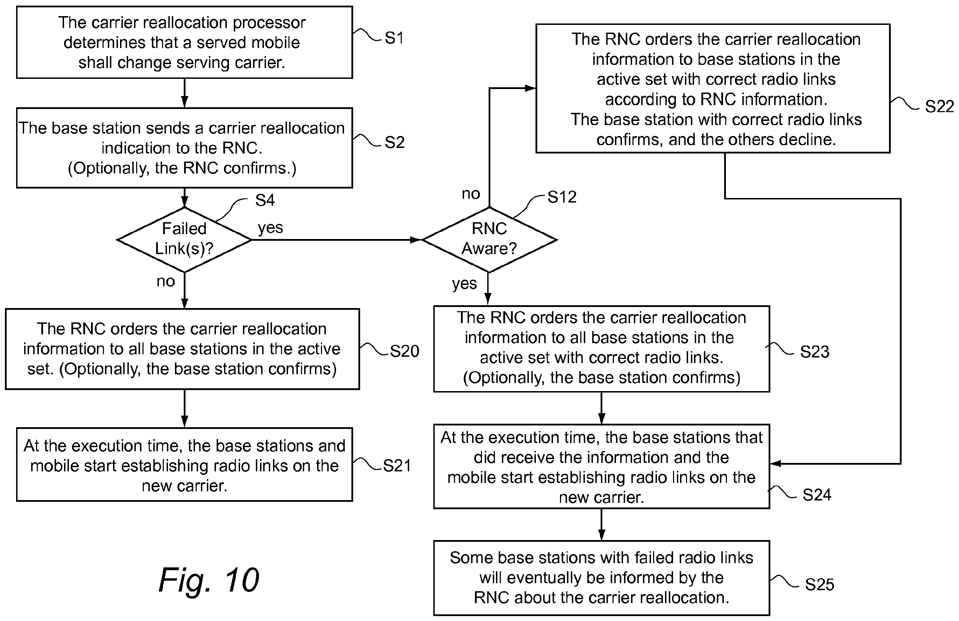

Figure 10 is a non-limiting example flowchart associated with the non-limiting example related to Figure 9. At step S 1, a carrier reallocation processor in the serving base station determines that a served mobile terminal shall change carrier. The serving base station sends a carrier reallocation decision and execution time to the mobile terminal which optionally confirms same (step S2). The mobile terminal relays the carrier reallocation information to other base stations having a cell in mobile's active set, and optionally, those base stations confirm (step S3). A determination is made in step S4 whether one or more radio links with the mobile terminal have failed. If not, the RNC orders the carrier reallocation information, i.e., the actual determination that the carrier reallocation is to occur, to other base stations in the active set and optionally the base stations confirm (step S20). The active set base stations and the mobile terminal start establishing radio links using the new carrier at the execution time (step S21). Otherwise, another decision is made in step S12 whether the RNC is aware of the failed link(s). If so, the RNC orders the carrier reallocation information, i.e., the actual determination that the carrier reallocation is to occur, to other base stations in the active set with correct radio links, and the base stations optionally confirm (step S23). The base stations that did receive the information start establishing radio links on the new carrier with the mobile terminal at the execution time (step S24), but for the failed base stations, the RNC eventually informs them about the carrier reallocation (step S26). If the RNC is unaware of the failed link(s), the RNC orders the carrier reallocation information to all the base stations in the active set with correct/functioning radio links to the mobile terminal. Those base stations with functioning radio links confirm, and the other base stations decline (step 22).

In yet another example non-limiting example where an RNC is not present, or is not used as in an LTE system, the serving base station signals directly to some or all non-serving cells in the same or other base station in the active set about the carrier reallocation.

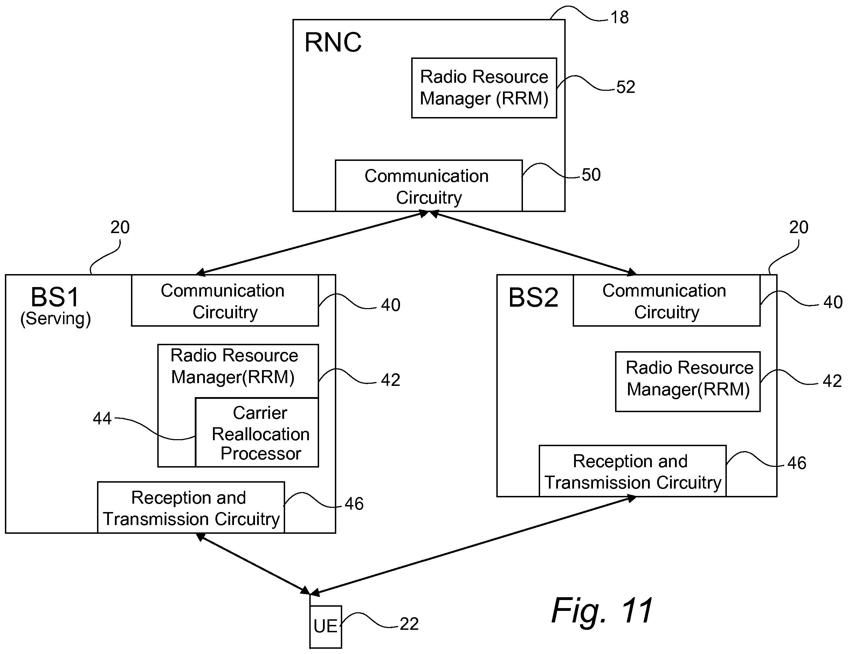

Figure 11 shows non-limiting function block diagrams illustrating example computer-implemented functional entities in the RNC and base stations for implementing the example signaling and procedures described in the previous figures. The UE 22 is shown associated with two base stations 20: a serving base station BS1 and a non-serving base station BS2. Both base stations have cells in the UE's active set. Each base station 20 includes communication circuitry for communicating with communication circuitry 50 in the RNC 18. Although not shown, the base stations may also communicate directly with each other without or independent of an RNC. The base stations also include radio transmission and reception circuitry 46 for conducting radio communications with the UE 22. Each base station 20 includes a radio resource manager (RRM) 42 for managing radio resources used to communicate with UEs, e.g., uplink and downlink radio transmission scheduling, transport format determination, etc. The RNC also includes an RRM 52 for higher level radio resource management such as admission control and mobility like intra- and inter-frequency handovers. The RRM 42 includes a carrier reallocation processor 42 for implementing many of the carrier reallocation operations described above.

As explained earlier, one non-limiting application of carrier reallocation is inter-frequency handover. In that case, the carrier reallocation time may be a synchronization signal or an execution time for executing the inter-frequency handover such that the base stations and the mobile radio station involved in the inter-frequency handover establish radio links on the second carrier frequency at the appropriate time.

The second carrier and timing information may be communicated using explicit control signals, e.g., in the form of a physical layer L1 signal or a MAC layer L2 message. The L1 signaling may also be performed implicitly by the UE simply changing a carrier frequency or code in its uplink transmissions and letting receiving base stations detect this carrier frequency change. In this case, the future communication with the mobile terminal being transmitted on a different carrier frequency or code is the carrier reallocation signal. This implicit approach assumes that the base stations are programmed with information about which frequenc(ies) or code(s) the UE may be allocated. Accordingly, although the carrier reallocation signal may be an explicit control command signal, it may also be a different type of signal.

Common to the examples, the base station currently serving the mobile radio terminal/UE manages uplink and/or downlink radio resources over several carriers and decides whether there should be a carrier reallocation. That decision may be based on any one or more factors such (but not limited to) load control, load balancing, coverage, interference, desired data rate or other quality of service parameter, type of information being transmitted, a change in radio conditions such for an inter-frequency handover, a change in operator, the introduction of new hardware or services, etc. When that decision is made, subsequent determinations and/or actions are taken such as which carrier(s) a particular UE should use in the uplink, synchronizing the UE and all base stations with cells in the UE's active set, and establishing a common execution time for the carrier reallocation.

Although it is assumed that the active set cells belong to different base stations, active set cells can belong to the same base station in which case the proposed signaling takes place within a single base station, and no base station coordination involving the UE or the RNC is needed. However, if there is a serving RNC and controlling RNC for this UE connection, then the serving base station needs to inform the serving RNC and the controlling RNC about the decision, and the serving RNC informs the UE. It is also possible that the base station can be geographically distributed with a main baseband unit and several remote radio units. The proposed signaling would take place between these units.

The fast carrier reallocation technology described above provides advantageous load sharing between carriers that can be distributed to the base station. As a result, decisions are made close to the radio resources allowing fast and responsive load sharing. This in turn enables flexible and accurate radio resource management

Although various embodiments have been shown and described in detail, the claims are not limited to any particular embodiment or example. None of the above description should be read as implying that any particular element, step, range, or function is essential such that it must be included in the scope of the claims. The scope of patented subject matter is defined only by the claims. The extent of legal protection is defined by the words recited in the allowed claims and their equivalents. Reference to an element in the singular is not intended to mean "one and only one" unless explicitly so stated, but rather "one or more." All structural and functional equivalents to the elements of the above-described preferred embodiment that are known to those of ordinary skill in the art are expressly incorporated herein by reference and are intended to be encompassed by the present claims. Moreover, it is not necessary for a device or method to address each and every problem sought to be solved by the present invention, for it to be encompassed by the present claims. It is not necessary for a device or method to address each and every problem sought to be solved by the present technology, for it to be encompassed by the present claims. No claim is intended to invoke paragraph 6 of 35 USC §112 unless the words "means for" or "step for" are used. Furthermore, no embodiment, feature, component, or step in this specification is intended to be dedicated to the public regardless of whether the embodiment, feature, component, or step is recited in the claims.

## Claims

1. A method for use in a cellular radio communication system (10 or 30) where a mobile radio terminal (22, 36) is served by a serving radio network controller (18) and a serving base station (20) associated with a serving cell using a first carrier frequency, and said mobile radio terminal (22; 36) having an active set of multiple base stations associated with it, said active set including said serving base station (20), the method comprising:
the serving base station deciding (S1) that a future communication with the mobile radio terminal should use a second different carrier frequency, and
the serving base station generating a carrier reallocation signal for being provided to base stations having a cell in said active set of cells associated with the mobile terminal, that indicates the serving base station's determination that the future communication with the mobile terminal is to be conducted using the second carrier frequency, wherein said carrier reallocation signal includes a time associated with the carrier reallocation for the future communication.

2. The method in claim 1, wherein the carrier reallocation signal is provided (S2) to the mobile radio terminal for the mobile terminal to notify (S3) the base stations having a cell in the active set of cells associated with the mobile terminal of the carrier reallocation.

3. The method in claim 1, further comprising:
the serving base station making a final determination that the carrier reselection will occur;
the serving base station providing the carrier reallocation signal to a radio network controller (18) coupled to base stations having a cell in the active set of cells,
the radio network controller sending a signal to notify base stations having a cell in the active set of cells of the carrier reallocation.

4. The method of claim 1, further comprising:
the serving base station providing the carrier reallocation signal to a radio network controller coupled to base stations having a cell in an active set of cells associated with the mobile terminal;
the radio network controller making a final determination that the carrier reallocation will occur; and
the radio network controller sending a signal to notify base stations having a cell in the active set of cells of the carrier reallocation.

5. The method of any one of claims 1-4, wherein the serving base station determines a need for the carrier reallocation based on a load associated with the first carrier frequency, the second carrier frequency, or both.

6. The method of any one of claims 1-4, wherein the serving base station determines a need for the carrier reallocation based on a coverage associated with the first carrier frequency, the second carrier frequency, or both.

7. The method of any one of claims 1-6, wherein the serving cell is controlled by one RNC and at least one of the cells in the UE's active set is controlled by another RNC, the method further comprising providing the carrier reallocation signal over an interface between the RNCs.

8. The method of any one of claims 1-6, wherein the UE is served by one serving RNC and all cells in the UE's active set are controlled by a different controlling RNC, the method further comprising providing the carrier reallocation signal over an interface between the controlling RNC and the serving RNC.

9. The method of any one of claims 1-8, wherein the mobile radio terminal is allocated one primary serving carrier at one time, and wherein the first carrier frequency is the primary serving carrier for the mobile radio terminal and then the second carrier frequency becomes the primary serving carrier for the mobile radio terminal for the future communication.

10. Apparatus for use in a serving base station (20) of a cellular communication system where a mobile radio (22) terminal is served by a serving radio network controller (18) and served by said serving base station associated with a serving cell using a first carrier frequency, and said mobile radio terminal (22; 36) having an active set of multiple base stations associated with it, said active set including said serving base station (20), wherein an electronic data processing circuitry (42) is arranged to:
decide that a future communication with the mobile radio terminal should use a second different carrier frequency, and
generate a carrier reallocation signal for being provided to base stations having a cell in said active set of cells associated with the mobile terminal, that indicates the serving base station's determination that the future communication with the mobile terminal is to be conducted using the second carrier frequency, wherein the carrier reallocation signal includes a time associated with the carrier reallocation for the future communication.

11. The apparatus in claim 10, further comprising a transmitter (46), wherein the electronic data processing circuitry is arranged to transmit via the transmitter a carrier reallocation signal to the mobile radio terminal for the mobile terminal to notify other base stations that have a cell in an active set of cells associated with the mobile terminal of the carrier reallocation.

12. The apparatus in claim 10, wherein the electronic data processing circuitry is arranged to:
make a final determination that the carrier reselection will occur; and
provide the carrier reallocation signal to a radio network controller (18) coupled to base stations having a cell in the active set of cells to send a signal to notify base stations having a cell in the active set of cells of the carrier reallocation.

13. The apparatus in claim 10, wherein the electronic data processing circuitry arranged to:
provide the carrier reallocation signal to a radio network controller (18) coupled to base stations having a cell in an active set of cells associated with the mobile terminal to make a final determination that the carrier reallocation will occur and to send a signal to notify base stations having a cell in the active set of cells of the carrier reallocation.

## Patentansprüche

1. Verfahren zur Verwendung in einem mobilen Funkkommunikationssystem (10 oder 30), wobei ein Mobilfunkendgerät (22, 36) von einer versorgenden Funknetzsteuerung (18) und von einer versorgenden Basisstation (20), die an einer Versorgungszelle angegliedert ist, die eine erste Trägerfrequenz verwendet, versorgt wird, und das Mobilfunkendgerät (22; 36) einen aktiven Satz von mehreren Basisstationen (20) aufweist, die mit dem Mobilfunkendgerät (22; 36) verbunden sind, wobei der aktive Satz die versorgende Basisstation (20) aufweist, wobei das Verfahren umfasst:
Entscheiden durch die versorgende Basisstation (S1), ob eine zukünftige Kommunikation mit dem Mobilfunkendgerät eine zweite unterschiedliche Trägerfrequenz verwenden sollte, und
Erzeugen eines Träger-Neuzuweisungssignals durch die versorgende Basisstation, wobei das Träger-Neuzuweisungssignal Basisstationen mit einer Zelle in dem aktiven Satz von Zellen, die dem mobilen Endgerät zugeordnet sind, bereitgestellt wird,
wobei das Träger-Neuzuweisungssignal die Festlegung der versorgenden Basisstation anzeigt, dass die Kommunikation mit dem mobilen Endgerät in Zukunft mit der zweiten unterschiedlichen Trägerfrequenz erfolgen soll, wobei das Träger-Neuzuweisungssignal eine Zeitdauer umfasst, die mit der Träger-Neuzuweisung für die zukünftige Kommunikation in Verbindung steht.

2. Verfahren nach Anspruch 1, wobei das Träger-Neuzuweisungssignal dem Mobilfunkendgerät für das mobile Endgerät zur Verfügung gestellt wird (S2), um die Basisstationen zu informieren (S3), dass die Basisstationen eine Zelle in dem aktiven Satz von Zellen haben, die mit dem mobilen Endgerät der Träger-Neuzuweisung verbunden ist.

3. Verfahren nach Anspruch 1, weiterhin umfassend:
dass die versorgende Basisstation eine endgültige Festlegung vornimmt, dass die Trägerwiederanwahl erfolgen wird;
wobei die versorgende Basisstation das Träger-Neuzuweisungssignal einer Funknetzsteuerung (18) bereitstellt, die an Basisstationen gekoppelt ist, die eine Zelle in dem aktiven Satz von Zellen haben,
wobei die Funknetzsteuerung ein Signal sendet, um Basisstationen zu benachrichtigen, die eine Zelle aus dem aktiven Satz von Zellen der Träger-Neuzuweisung aufweisen.

4. Verfahren nach Anspruch 1, weiterhin umfassend:
dass die versorgende Basisstation das Träger-Neuzuweisungssignal einer Funknetzsteuerung bereitstellt, die an Basisstationen gekoppelt ist, die eine Zelle in einem aktiven Satz von Zellen haben, der mit dem mobilen Endgerät verbunden ist;
wobei die Funknetzsteuerung eine endgültige Festlegung vornimmt, dass die Träger-Neuzuweisung erfolgen wird; und
wobei die Funknetzsteuerung ein Signal sendet, um die Basisstationen mit einer Zelle in dem aktiven Satz von Zellen der Träger-Neuzuweisung zu informieren.

5. Verfahren nach einem der Ansprüche 1-4, wobei die versorgende Basisstation einen Bedarf für die Träger-Neuzuweisung auf der Basis einer Last festlegt, die in Verbindung steht, mit der ersten Trägerfrequenz und/oder der zweiten Trägerfrequenz.

6. Verfahren nach einem der Ansprüche 1-4, wobei die versorgende Basisstation einen Bedarf für die Träger-Neuzuweisung auf der Basis einer Abdeckung festlegt, die in Verbindung steht, mit der ersten Trägerfrequenz und/oder der zweiten Trägerfrequenz.

7. Verfahren nach einem der Ansprüche 1-6, wobei die Versorgungszelle durch eine RNC gesteuert wird und mindestens eine der Zellen in dem aktiven Satz des UE von einer anderen RNC gesteuert wird, wobei das Verfahren weiterhin das Bereitstellen des Träger-Neuzuweisungssignals über eine Schnittstelle zwischen den RNCs umfasst.

8. Verfahren nach einem der Ansprüche 1-6, wobei das UE durch ein Serving-RNC verwaltet wird, und alle Zellen in dem aktiven Satz der UE durch eine andere steuernde RNC gesteuert werden, wobei das Verfahren weiterhin das Bereitstellen des Träger-Neuzuweisungssignals über eine Schnittstelle zwischen dem steuernden RNC und dem versorgenden RNC umfasst.

9. Verfahren nach einem der Ansprüche 1-8, wobei das Mobilfunkendgerät einem primären Versorgungsträger zu einem Zeitpunkt zugeordnet ist, und wobei die erste Trägerfrequenz der primäre Versorgungsträger für das Mobilfunkendgerät ist und dann die zweite Trägerfrequenz zum primären Versorgungsträger für die zukünftige Kommunikation des Mobilfunkendgeräts wird.

10. Vorrichtung zur Verwendung in einer versorgenden Basisstation (20) eines mobilen Kommunikationssystems, wobei ein Mobilfunkendgerät (22) von einer versorgenden Funknetzsteuerung (18) und von der versorgenden Basisstation versorgt ist, die an einer Versorgungszelle angegliedert ist, die eine erste Trägerfrequenz verwendet, und das Mobilfunkendgerät (22; 36) einen aktiven Satz von mehreren Basisstationen aufweist, die mit dem diesem verbunden sind, wobei der aktive Satz die verwaltende Basisstation (20) umfasst, wobei eine elektronische Datenverarbeitungsschaltung (42)eingerichtet ist, um:
zu entscheiden, dass eine zukünftige Kommunikation mit dem Mobilfunkendgerät eine zweite unterschiedliche Trägerfrequenz nutzen sollte, und
ein Träger-Neuzuweisungssignal zu generieren, welches Basisstationen, die mit einer Zelle in dem aktiven Satz von Zellen verbunden ist, bereitgestellt wird,
wobei das Träger-Neuzuweisungssignal die Festlegung der versorgenden Basisstation anzeigt, dass die Kommunikation mit dem mobilen Endgerät in Zukunft mit der zweiten unterschiedlichen Trägerfrequenz erfolgen soll, wobei das Träger-Neuzuweisungssignal eine Zeitdauer umfasst, die mit der Träger-Neuzuweisung für die zukünftige Kommunikation in Verbindung steht.

11. Vorrichtung nach Anspruch 10, weiterhin umfassend einen Sender (46), wobei die elektronische Datenverarbeitungsschaltung eingerichtet ist, um über den Sender ein Träger-Neuzuweisungssignals an Mobilfunkendgeräte für das mobile Endgerät zu übertragen, um andere Basisstationen, mit einer Zelle in dem aktiven Satz von Zellen, die mit dem mobilen Endgerät der Träger-Neuzuweisung verbunden sind, zu informieren.

12. Vorrichtung nach Anspruch 10, wobei die elektronische Datenverarbeitungsschaltung dazu eingerichtet ist:
dass die versorgende Basisstation eine endgültige Festlegung vornimmt, dass die Trägerwiederanwahl erfolgen wird, und
das Träger-Neuzuweisungssignal einer Funknetzsteuerung (18) bereitzustellen, die an Basisstationen gekoppelt ist, die eine Zelle in dem aktiven Satz von Zellen haben, um ein Signal zu senden,
um Basisstationen, die eine Zelle aus dem aktiven Satz von Zellen der Träger- Neuzuweisung aufweisen, zu informieren.

13. Vorrichtung nach Anspruch 10, wobei die elektronische Datenverarbeitungsschaltung dazu eingerichtet ist:
dass das Träger-Neuzuweisungssignal einer Funknetzsteuerung (18) bereitgestellt wird, die mit Basisstationen mit einer Zelle in einem aktiven Satz von Zellen, die mit dem mobilen Endgerät verbunden sind, gekoppelt ist, damit eine endgültige Festlegung getroffen wird, dass die Träger-Neuzuweisung auftreten wird, und um ein Signal an die Basisstationen zu senden, um Basisstationen zu benachrichtigen, die eine Zelle aus dem aktiven Satz von Zellen der Träger-Neuzuweisung aufweisen.

## Revendications

1. Procédé à utiliser dans un système cellulaire de radiocommunication (10 ou 30) où un terminal mobile de radiocommunication (22, 36) est desservi par une unité de commande de réseau de radiocommunication de desserte (18) et une station de base de desserte (20) associées à une cellule de desserte en utilisant une première fréquence porteuse, et ledit terminal mobile de radiocommunication (22; 36) ayant un ensemble actif de stations de base multiples associé à ce dernier, ledit ensemble actif incluant ladite station de base de desserte (20), le procédé comprenant :
la station de base de desserte décidant (S1) qu'une communication future avec le terminal mobile de radiocommunication devrait utiliser une seconde fréquence porteuse différente, et
la station de base de desserte produisant un signal de réaffectation de porteuse à fournir aux stations de base ayant une cellule dans ledit ensemble actif de cellules associées au terminal mobile, qui indique la détermination de la station de base de desserte que la communication future avec le terminal mobile doit être menée en utilisant la seconde fréquence porteuse, dans lequel ledit signal de réaffectation de porteuse inclut un temps associé à la réaffectation de porteuse pour la communication future.

2. Procédé selon la revendication 1, dans lequel le signal de réaffectation de porteuse est fourni (S2) au terminal mobile de radiocommunication pour que le terminal mobile notifie (S3) la réaffectation de porteuse aux stations de base ayant une cellule dans l'ensemble actif de cellules associées au terminal mobile.

3. Procédé selon la revendication 1, comprenant en outre :
la station de base de desserte effectuant une détermination finale en ce que la re-sélection de porteuse va se produire ;
la station de base de desserte fournissant le signal de réaffectation de porteuse à une unité de commande de réseau de radiocommunication (18) couplé aux stations de base ayant une cellule dans l'ensemble actif de cellules,
l'unité de commande de réseau de radiocommunication envoyant un signal pour notifier la réaffectation de porteuse aux stations de base ayant une cellule dans l'ensemble actif de cellules.

4. Procédé selon la revendication 1, comprenant en outre :
la station de base de desserte fournissant le signal de réaffectation de porteuse à une unité de commande de réseau de radiocommunication couplée aux stations de base ayant une cellule dans un ensemble actif de cellules associées au terminal mobile ;
l'unité de commande de réseau de radiocommunication effectuant une détermination finale en ce que la réaffectation de porteuse va se produire ; et
l'unité de commande de réseau de radiocommunication envoyant un signal pour notifier la réaffectation de porteuse aux stations de base ayant une cellule dans l'ensemble actif de cellules.

5. Procédé selon l'une quelconque des revendications 1 à 4, dans lequel la station de base de desserte détermine un besoin de réaffectation de porteuse sur la base d'une charge associée à la première fréquence porteuse, la seconde fréquence porteuse, ou les deux.

6. Procédé selon l'une quelconque des revendications 1 à 4, dans lequel la station de base de desserte détermine un besoin de la réaffectation de porteuse sur la base d'une portée associée à la première fréquence porteuse, la seconde fréquence porteuse, ou les deux.

7. Procédé selon l'une quelconque des revendications 1 à 6, dans lequel la cellule de desserte est commandée par une unité de commande de réseau de radiocommunication RNC et au moins une des cellules dans l'ensemble actif de l'UE est commandée par une autre RNC, le procédé comprenant en outre la fourniture du signal de réaffectation de porteuse sur une interface entre les RNC.

8. Procédé selon l'une quelconque des revendications 1 à 6, dans lequel l'UE est desservi par une RNC de desserte et toutes les cellules dans l'ensemble actif de l'UE sont commandées par une RNC de commande différente, le procédé comprenant en outre la fourniture du signal de réaffectation de porteuse sur une interface entre la RNC de commande et la RNC de desserte.

9. Procédé selon l'une quelconque des revendications 1 à 8, dans lequel on attribue au terminal mobile de radiocommunication une porteuse de desserte primaire à la fois, et dans lequel la première fréquence porteuse est la porteuse de desserte primaire pour le terminal mobile de radiocommunication et ensuite la seconde fréquence porteuse devient la porteuse de desserte primaire pour le terminal mobile de radiocommunication pour la communication future.

10. Appareil à utiliser dans une station de base de desserte (20) d'un système cellulaire de communication où un terminal mobile de radiocommunication (22) est desservi par une unité de commande de réseau de radiocommunication de desserte (18) et desservi par ladite station de base de desserte associée à une cellule de desserte en utilisant une première fréquence porteuse, et ledit terminal mobile de radiocommunication (22; 36) ayant un ensemble actif de stations de base multiples associées à ce dernier, ledit ensemble actif incluant ladite station de base de desserte (20), dans lequel des circuits électroniques de traitement de données (42) sont agencés pour :
décider qu'une communication future avec le terminal mobile de radiocommunication devrait utiliser une seconde fréquence porteuse différente, et
produire un signal de réaffectation de porteuse à fournir aux stations de base ayant une cellule dans ledit ensemble actif de cellules associées au terminal mobile, qui indique la détermination de la station de base de desserte en ce que la communication future avec le terminal mobile doit être menée en utilisant la seconde fréquence porteuse, dans lequel le signal de réaffectation de porteuse inclut un temps associé à la réaffectation de porteuse pour la communication future.

11. Appareil selon la revendication 10, comprenant en outre un émetteur (46), dans lequel les circuits électroniques de traitement de données sont agencés pour émettre via l'émetteur un signal de réaffectation de porteuse vers le terminal mobile de radiocommunication pour que le terminal mobile notifie la réaffectation de porteuse à d'autres stations de base qui ont une cellule dans un ensemble actif de cellules associées au terminal mobile.

12. Appareil selon la revendication 10, dans lequel les circuits électroniques de traitement de données sont agencés pour :
effectuer une détermination finale en ce que la re-sélection de porteuse va se produire ; et
fournir le signal de réaffectation de porteuse à une unité de commande de réseau de radiocommunication (18) couplé à des stations de base ayant une cellule dans l'ensemble actif de cellules pour envoyer un signal pour notifier la réaffectation de porteuse à des stations de base ayant une cellule dans l'ensemble actif des cellules.

13. Appareil selon la revendication 10, dans lequel les circuits électroniques de traitement de données sont agencés pour :
fournir le signal de réaffectation de porteuse à une unité de commande de réseau de radiocommunication (18) couplée aux stations de base ayant une cellule dans un ensemble actif de cellules associées au terminal mobile pour effectuer une détermination finale en ce que la réaffectation de porteuse va se produire et pour envoyer un signal pour notifier la réaffectation de porteuse aux stations de base ayant une cellule dans l'ensemble actif de cellules.
